# EUROPEAN PATENT SPECIFICATION

(11) **EP 0 972 691 B1**
(45) Date of publication and mention of the grant of the patent: **29.03.2006**
(21) Application number: 99202182.4
(22) Date of filing: 06.07.1999
(51) Int. Cl.: B60T 13/56

(54) **A brake booster**
Bremskaftverstärker
Servofrein

(30) Priority: 16.07.1998 GB 9815362
(43) Date of publication of application: 19.01.2000
(73) Proprietor: Delphi Technologies, Inc., Troy, MI 48007 (US)
(72) Inventor: Curie, René, 95540 Mery sur Oise (FR); Castel, Philippe G., 75005 Paris (FR); Loche, Jacques, 93200 Saint Denis (FR); Poupard, Dominique, 95130 Franconville (FR); Petin, Bernard, 77410 Claye Souilly (FR); Degorce, Frédéric C., 91220 Bretigny sur Orge (FR)
(74) Representative: Denton, Michael John

(56) References cited:
- DE-A- 4 202 820
- DE-A- 19 718 375
- DE-C- 4 332 611
- US-A- 5 355 770

## Description

### Technical Field

The present invention relates to a brake booster or servomotor of the braking system of a motor vehicle.

### Background of the Invention

A known brake booster includes a housing having a front wall and a rear wall, a diaphragm secured inside the housing to define a pair of chambers inside the housing, and one or more tie rods extending between the front and rear walls. EP-A-0331535 discloses tie rods which each comprise a tube extending between the front and rear walls, and an elongate bolt extending through the tube for securing the booster to the firewall of the vehicle. DE-A-19 718 375 discloses a brake booster in accordance with the preamble of claim 1.

### Summary of the Invention

It is an object of the present invention to provide an improvement to the above mentioned arrangement.

A brake booster in accordance with the present invention comprises a housing having a front wall and a rear wall; a diaphragm mounted inside the housing to define first and second chambers within the housing; a piston assembly sealably slidably mounted in the rear wall; and at least one tie rod extending between the front wall and the rear wall and through apertures in the front and rear walls; wherein the tie rod comprises a first tube, a second tube, and a bolt, one end of the first tube extending through the aperture in the front wall and being secured to the front wall, one end of the second tube being secured to the rear wall, the other ends of the tubes being secured together, the second tube having an internal shoulder adjacent the rear wall, the bolt having a head engaging the internal shoulder and a shank extending through the aperture in the rear wall.

The present invention provides a brake booster which is lighter in weight than the above mentioned prior known arrangement.

### Brief Description of the Drawings

The present invention will now be described, by way of example, with reference to the accompanying drawings, in which:-
Figure 1 is a cross-sectional view of a brake booster in accordance with the present invention;
Figure 2 is an enlarged cross-sectional view of one of the tie rods of the brake booster of Figure 1; and
Figure 3 is a similar view to Figure 2 showing a tool for tightening the bolt.

### Description of the Preferred Embodiment

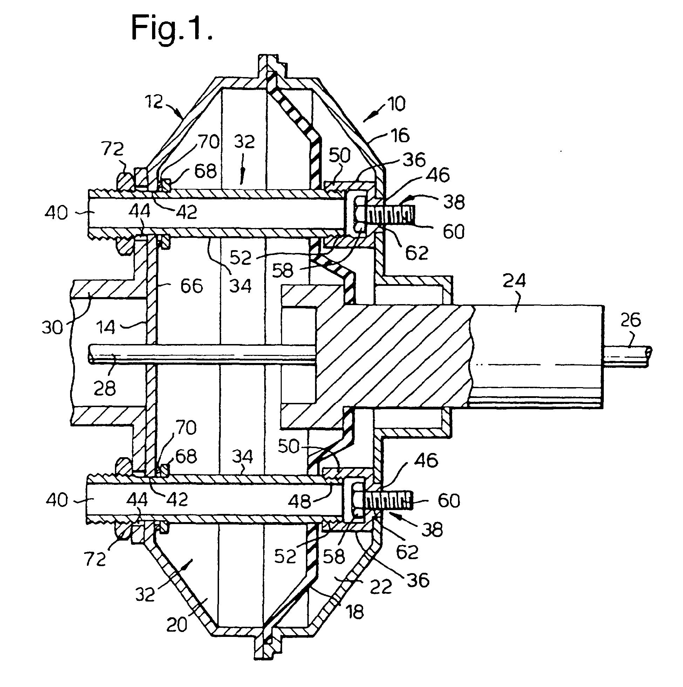

Referring to Figure 1, the brake booster 10 in accordance with the present invention comprises a housing 12 comprising a front wall 14 and a rear wall 16. A diaphragm 18 is positioned inside the housing 12 to define a front chamber 20 and a rear chamber 22 inside the housing. The front chamber 20 is connectable to a vacuum source (not shown) and the rear chamber 22 is connectable to air at atmospheric pressure or above. A piston assembly 24 is slidably sealably mounted in the rear wall 16. A push rod 26 is connected to the piston assembly 24 and is connectable to the brake pedal (not shown) of a motor vehicle. An actuating rod 28 is connected to the piston assembly 24 and is connectable with a piston (not shown) of a master cylinder of the braking system of the motor vehicle. A housing 30 of the master cylinder may be mounted on the front wall 14 of the housing 12 of the booster 10.

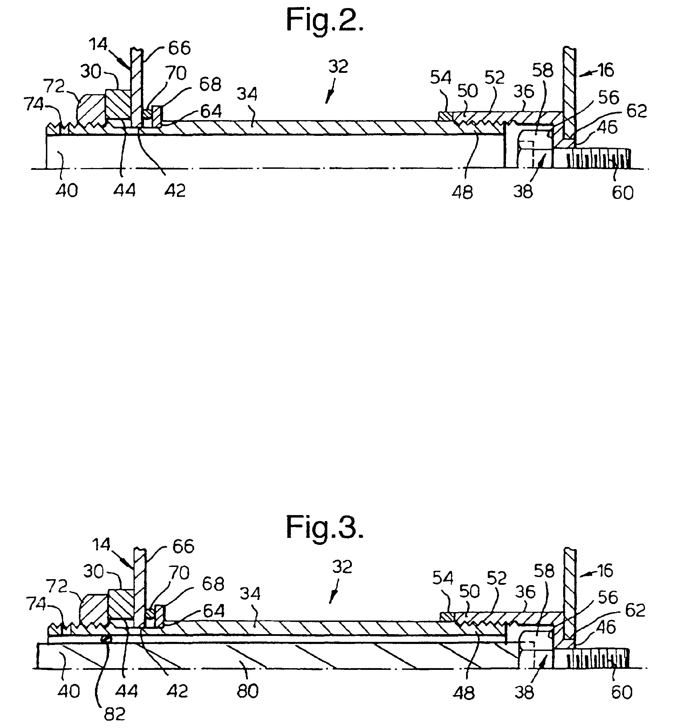

A pair of tie rods 32 extend between the front and rear walls 14,16 of the housing 12 of the booster 10 to strengthen the housing. Each tie rod 32 (Figure 2) comprises a first tube 34, a second tube 36 and a bolt 38. One end 40 of the first tube 34 extends through an aperture 42 in the front wall 14 and then through an aperture 44 in the master cylinder housing 30 and has an external threaded portion. One end 46 of the second tube 36 is secured (for example, by crimping) to the rear wall 16. The other ends 48,50 of the first and second tubes 34,36 respectively, are permanently secured to each other either by screw thread 52 and then adhesive and punching 54 (as shown), or by crimping, or by welding. The second tube 36 has an internal shoulder 56 adjacent the rear wall 16. The bolt 38 has a head 58 which engages (abuts) the internal shoulder 56 of the second tube 36 and a threaded shank 60 which extends through an aperture 62 in the rear wall 16 for mounting the booster 10 in a motor vehicle.

The second tube 36 preferably has a larger diameter than the first tube 34 so that the other end 48 of the first tube is positioned inside the other end 50 of the second tube. The length of the first tube 34 is preferably such that other end 48 of the first tube is positioned adjacent the head 58 of the bolt 38. In the latter case, an annular washer (not shown) may be positioned between, and abut, the other end 48 of the first tube 34 and the head 58 of the bolt 38 to prevent the bolt moving during transportation (prior to installation of the booster 10 in a motor vehicle) and to help align the bolt during mounting of the booster on the firewall.

The first tube 34 has an external, circumferentially extending, shoulder 64 adjacent the aperture 40 in the front wall 14 which is directed towards the inner surface 66 of the front wall. A ring member 68 abuts the external shoulder 64 and a seal 70 is positioned between and engages the ring member and the inner surface 66 of the front wall 14. A nut 72 is threaded on the one end 40 of the first tube 34 to draw the external shoulder 64 on the first tube 34 towards the inner surface 66 of the front wall 14 to clamp the ring member 68 and seal the aperture 42 in the front wall, and to secure the master cylinder housing 30 to the front wall.

The first tube 34 allows access to the head 58 of the bolt 38 by a suitable tool 80 (Figure 3) inserted from the front wall 14 for mounting the booster 10 in a motor vehicle removing the need for an elongate bolt and thereby providing a booster which is lighter in weight. The tool 80 may be pre-assembled inside the tie rod 32 ready for mounting the brake booster 10 in a motor vehicle. To prevent rattling and/or unintended removal of the tool 80, an annular plastic or rubber part 82 may be positioned inside the second tube 34 to hold the tool 80 in place. After installation of the booster 10 in the vehicle, the tool 80 may be removed and a cap (not shown) placed in the one end 40 of the first tube 34 to close the tie rod 32.

The diameter of the first tube 34 can be made the same diameter as the tubes in prior known designs of booster, thereby allowing the present invention to be used with presently available booster components. Where the first and second tubes 34,36 make a screw fit connection, an adjusting slot 74 for a suitable tool may be provided at the one end 40 of the first tube for adjusting the relative positions of the first and second tubes prior to permanent securing. The first and second tubes 34,36 and the bolt 38 may be pre-assembled together before installation in the booster 10.

## Claims

1. A brake booster (10) comprising a housing (12) having a front wall (14) and a rear wall (16); a diaphragm (18) mounted inside the housing to define first and second chambers (20,22) within the housing; a piston assembly (24) sealably slidably mounted in the rear wall; and at least one tie rod (32) extending between the front wall and the rear wall and through apertures (42,62) in the front and rear walls; wherein the tie rod comprises a first tube (34), a second tube (36), and a bolt (38), one end (40) of the first tube extending through the aperture in the front wall and being secured to the front wall, one end (46) of the second tube being secured to the rear wall, the other ends (48,50) of the tubes being secured together, the second tube having an internal shoulder (56) adjacent the rear wall, **characterised by** the bolt having a head (58) engaging the internal shoulder and a shank (60) extending through the aperture in the rear wall.

2. A brake booster as claimed in Claim 1, wherein the second tube (36) has a diameter which is greater than the diameter of the first tube (34), the other end (48) of the first tube being positioned inside the other end (50) of the second tube.

3. A brake booster as claimed in Claim 2, wherein the other end (48) of the first tube (34) is positioned adjacent the head (58) of the bolt (38).

4. A brake booster as claimed in any one of Claims 1 to 3, wherein the other ends (48,50) of the first and second tubes (34,36) are secured together by a screw thread.

5. A brake booster as claimed in any one of Claims 1 to 4, wherein the one end (40) of the first tube (34) and an external shoulder (64) directed towards the inner surface (66) of the front wall (14) and an external thread, a ring member (68) engaging the external shoulder and the inner surface, and a nut (72) being threaded on the external thread, to secure the one end of the first tube to the front wall.

6. A brake booster as claimed in any one of Claims 1 to 5, wherein a tool (80) is positioned inside the first and second tubes (34,36) to extend along the tubes and engage the head (58) of the bolt (38).

## Patentansprüche

1. Bremsverstärker (10) mit einem Gehäuse (12), das eine vordere Wand (14) und eine hintere Wand (16) aufweist; einer Membran (18), die in dem Gehäuse befestigt ist, um eine erste und eine zweite Kammer (20, 22) in dem Gehäuse zu definieren; einer Kolbenanordnung (24), die abdichtbar, verschiebbar in der hinteren Wand befestigt ist; und zumindest einer Verbindungsstange (32), die sich zwischen der vorderen Wand und der hinteren Wand und durch Öffnungen (42, 62) in der vorderen und der hinteren Wand erstreckt; wobei die Verbindungsstange ein erstes Rohr (34), ein zweites Rohr (36) und eine Schraube (38) umfasst, wobei ein Ende (40) des ersten Rohrs sich durch die Öffnung in der vorderen Wand erstreckt und an der vorderen Wand befestigt ist, ein Ende (46) des zweiten Rohrs an der hinteren Wand befestigt ist, die anderen Enden (48, 50) der Rohre aneinander befestigt sind, und das zweite Rohr eine innere Schulter (56) benachbart zu der hinteren Wand aufweist,
**dadurch gekennzeichnet, dass**
die Schraube einen Kopf (58), der mit der inneren Schulter in Eingriff steht, und einen Schaft (60), der sich durch die Öffnung in der hinteren Wand erstreckt, aufweist.

2. Bremsverstärker nach Anspruch 1, wobei das zweite Rohr (36) einen Durchmesser aufweist, der größer als der Durchmesser des ersten Rohrs (34) ist und das andere Ende (48) des ersten Rohrs innerhalb des anderen Endes (50) des zweiten Rohrs positioniert ist.

3. Bremsverstärker nach Anspruch 2, wobei das andere Ende (48) des ersten Rohrs (34) benachbart zu dem Kopf (58) der Schraube (38) positioniert ist.

4. Bremsverstärker nach einem der Ansprüche 1 bis 3, wobei die anderen Enden (48, 50) des ersten und des zweiten Rohrs (34, 36) durch ein Schraubengewinde aneinander befestigt sind.

5. Bremsverstärker nach einem der Ansprüche 1 bis 4, wobei das eine Ende (40) des ersten Rohrs (34) eine äußere Schulter (64), die zu der Innenfläche (66) der vorderen Wand (14) gerichtet ist, und ein äußeres Gewinde, ein Ringelement (68), das mit der äußeren Schulter und der Innenfläche in Eingriff steht, und eine Mutter (72), die auf das äußere Gewinde geschraubt ist, um das eine Ende des ersten Rohrs an der vorderen Wand zu befestigen, aufweist.

6. Bremsverstärker nach einem der Ansprüche 1 bis 5, wobei ein Werkzeug (80) innerhalb des ersten und des zweiten Rohrs (34, 36) positioniert ist, um sich entlang der Rohre zu erstrecken und mit dem Kopf (58) der Schraube (38) in Eingriff zu stehen.

## Revendications

1. Servofrein (10) comprenant un réceptacle (12) possédant une paroi avant (14) et une paroi arrière (16) ; un diaphragme (18) monté à l'intérieur du réceptacle pour former une première et une deuxième chambres (20, 22) à l'intérieur du réceptacle ; un ensemble à piston (24) monté pour coulisser de manière étanche dans la paroi arrière ; et au moins une barre d'accouplement (32) s'étendant entre la paroi avant et la paroi arrière et à travers des ouvertures (42, 62) pratiquées dans les parois avant et arrière ; dans lequel la barre d'accouplement comprend un premier tube (34), un deuxième tube (36), et un boulon (38), une extrémité (40) du premier tube s'étendant à travers l'ouverture pratiquée dans la paroi avant et étant fixée à la paroi avant, une extrémité (46) du deuxième tube étant fixée à la paroi arrière, les autres extrémités (48, 50) des tubes étant fixées les unes aux autres, le deuxième tube possédant un épaulement intérieur (56) adjacent à la paroi arrière, **caractérisé en ce que** le boulon possède une tête (58) qui engage l'épaulement intérieur et une queue (60) qui traverse l'ouverture pratiquée dans la paroi intérieure.

2. Servofrein selon la revendication 1, dans lequel le deuxième tube (36) a un diamètre supérieur au diamètre du premier tube (34), l'autre extrémité (48) du premier tube étant positionnée à l'intérieur de l'autre extrémité (50) du deuxième tube.

3. Servofrein selon la revendication 2, dans lequel l'autre extrémité (48) du premier tube (34) est positionnée en étant adjacente à la tête (58) du boulon (38).

4. Servofrein selon l'une quelconque des revendications 1 à 3, dans lequel les autres extrémités (48, 50) des premier et deuxième tubes (34, 36) sont fixées les unes aux autres par un filet à vis.

5. Servofrein selon l'une quelconque des revendications 1 à 4, dans lequel l'extrémité (40) du premier tube (34) et un épaulement extérieur (64) sont orientés vers la surface intérieure (66) de la paroi avant (14) et où un filet extérieur et un élément en anneau (68) engagent l'épaulement extérieur et la surface intérieure, un écrou (72) étant serré sur le filet extérieur pour fixer l'extrémité du premier tube sur la paroi avant.

6. Servofrein selon l'une quelconque des revendications 1 à 5, dans lequel un outil (80) est positionné à l'intérieur des premier et deuxième tubes (34, 36) pour s'étendre le long des tubes et engager la tête (58) du boulon (38).
